# EUROPEAN PATENT APPLICATION

(11) **EP 4 191 290 A1**
(43) Date of publication of application: **07.06.2023**
(21) Application number: 21848577.9
(22) Date of filing: 26.07.2021
(51) Int. Cl.: G01W 1/12

(54) **SOLAR RADIATION AMOUNT CORRECTION METHOD, SOLAR RADIATION AMOUNT CORRECTION DEVICE, COMPUTER PROGRAM, MODEL, MODEL GENERATION METHOD, AND MODEL PROVIDING METHOD**

(30) Priority: 31.07.2020 JP 2020130447
(71) Applicant: Mitsui Chemicals, Inc., Tokyo 104-0028 (JP)
(72) Inventor: MAEKAWA, Shintaro, Tokyo 105-7122 (JP); INATOMI, Yuji, Sodegaura-shi, Chiba 299-0265 (JP); SHIODA, Tsuyoshi, Sodegaura-shi, Chiba 299-0265 (JP)
(74) Representative: Hoffmann Eitle
(86) International application number: PCT/JP2021/027457
(87) International publication number: WO 2022/024960

(57) **Abstract**

Provided are an insolation correction method, an insolation correction device, a computer program, a model, a model generating method, and a model providing method in which insolation data having a small deviation from an actually measured value can be provided. An insolation correction method, includes: acquiring insolation data; acquiring weather data; and correcting the acquired insolation data, on the basis of the acquired weather data.

## Description

### [Technical Field]

The present invention relates to an insolation correction method, an insolation correction device, a computer program, a model, a model generating method, and a model providing method.

### [Background Art]

Recently, the introduction of renewable energy has been instigated in order for global warming countermeasures or the like. Photovoltaic power generation that is one of the renewable energy has an advantage of not generating greenhouse effect gas, and is expected to be widely used. It is necessary to predict the insolation in the construction plan or the actual operation of a photovoltaic power plant.

In Patent Document 1, a system is disclosed in which at a point where an insolation is actually measured, an actually measured value of the insolation is compared with an estimate value of the insolation that is obtained by a predetermined calculation expression, using weather satellite image data relevant to the point, parameters of the calculation expression are adjusted such that an error between the estimate value and the actually measured value is an allowance or less, and the insolation at an arbitrary point close to the actual measurement point is estimated by the calculation expression using the adjusted parameters.

### [Prior Art Document]

### [Patent Document]

Patent Document 1: Japanese Patent Laid-Open Publication No. 11-211560

### [Summary of Invention]

### [Problems to be Solved by Invention]

However, in the system of Patent Document 1, an absorption coefficient of the insolation according to aerosol particles or moisture vapor is also considered together with the weather satellite image data, but the influence of the cloud is not sufficiently considered. In addition, there are a plurality of weather information service providers globally providing weather data including insolation data, but the insolation data provided by any of the weather information service providers may have a large deviation from the actually measured value of the insolation.

The present invention has been made in consideration of such circumstances, and an object thereof is to provide an insolation correction method, an insolation correction device, a computer program, a model, a model generating method, and a model providing method in which insolation data having a small deviation from an actually measured value can be provided.

### [Means for Solving Problems]

An insolation correction method according to an embodiment of the present invention, includes: acquiring insolation data; acquiring weather data; and correcting the acquired insolation data, on the basis of the acquired weather data.

An insolation correction device according to an embodiment of the present invention, includes: a first acquisition unit acquiring insolation data; a second acquisition unit acquiring weather data; and a correction unit correcting the insolation data acquired by the first acquisition unit, on the basis of the weather data acquired by the second acquisition unit.

A computer program according to an embodiment of the present invention allows a computer to execute processing of: acquiring insolation data; acquiring weather data; and correcting the acquired insolation data, on the basis of the acquired weather data.

A model according to an embodiment of the present invention is generated by machine learning with insolation data and weather data as an input variable and insolation data after correction as an output variable.

A model generating method according to an embodiment of the present invention, includes: acquiring insolation data and weather data; acquiring insolation data after correction; and generating a model with the insolation data and the weather data as an input variable and the insolation data after correction as an output variable.

A model providing method according to an embodiment of the present invention, includes: storing a plurality of different models generated by machine learning with insolation data and weather data as an input variable and insolation data after correction as an output variable; receiving selection of a required weather information service provider among a plurality of weather information service providers; and providing a model corresponding to the selected weather information service provider, among the plurality of different models.

### [Effects of Invention]

According to the present invention, it is possible to provide insolation data having a small deviation from an actually measured value.

### [Brief Description of Drawings]

FIG. 1 is a schematic view illustrating an example of a configuration of an insolation correction system of this embodiment.
FIG. 2 is a block diagram illustrating an example of a configuration of a server.
FIG. 3 is a schematic view illustrating an example of insolation data.
FIG. 4 is an explanatory diagram illustrating an example of weather data.
FIG. 5 is an explanatory diagram illustrating an example of an insolation correction method by a first correction unit.
FIG. 6 is a schematic view illustrating a first example of a daily accumulated insolation correction method by a second correction unit.
FIG. 7 is a schematic view illustrating a relationship between input data and output data.
FIG. 8 is a schematic view illustrating a second example of the daily accumulated insolation correction method by the second correction unit.
FIG. 9 is a schematic view illustrating a third example of the daily accumulated insolation correction method by the second correction unit.
FIG. 10 is a schematic view illustrating an example of a model generating method.
FIG. 11 is an explanatory diagram illustrating a correspondence relationship between a weather information service provider and a machine-learned model.
FIG. 12 is a flowchart illustrating a first example of insolation correction processing by the server.
FIG. 13 is a flowchart illustrating a second example of the insolation correction processing by the server.
FIG. 14 is a flowchart illustrating an example of model generating processing by the server.
FIG. 15 is an explanatory diagram illustrating an example of a correction result of a horizontal global insolation by the first correction unit.
FIG. 16 is an explanatory diagram illustrating an example of a correction result of a horizontal global insolation by the second correction unit.
FIG. 17 is an explanatory diagram illustrating an example of a correction result of an oblique insolation by the second correction unit.
FIG. 18 is a schematic view illustrating an example of a model providing method by the server.
FIG. 19 is a schematic view illustrating a first display example of an insolation that is provided by the server.
FIG. 20 is a schematic view illustrating a second display example of the insolation that is provided by the server.
FIG. 21 is a schematic view illustrating a third display example of the insolation that is provided by the server.
FIG. 22 is a schematic view illustrating a display example of a predicted power generation amount of a power plant that is provided by the server.
FIG. 23 is a schematic view illustrating a display example of a power selling income of the power plant that is provided by the server.

### [Mode for Carrying out Invention]

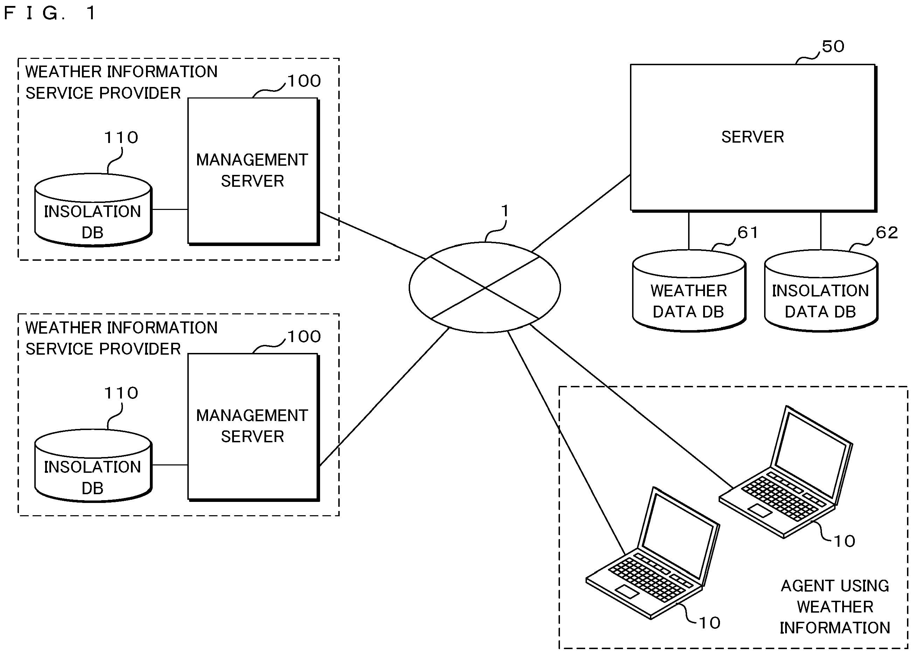

Hereinafter, the present invention will be described on the basis of the drawings illustrating embodiments thereof. FIG. 1 is a schematic view illustrating an example of the configuration of an insolation correction system of this embodiment. The insolation correction system includes a server 50 as an insolation correction device. The server 50 is capable of accessing a weather data DB 61 and an insolation data DB 62. The server 50 is connected to a communication network 1 such as the internet. Management servers 100 of a plurality of weather information service providers are respectively connected to the communication network 1. Each of the management servers 100 is capable of accessing an insolation DB 110. In addition, terminal devices 10 of a plurality of agents or users using weather information are respectively connected to the communication network 1. The terminal device 10, for example, is a personal computer (PC), a tablet, a smart phone, or the like.

The weather information service provider is a company globally providing a weather database, and provides insolation data to the user by using an individual prediction model. In the insolation DB 110, the insolation data generated by using the prediction model is recorded. The management server 100 is capable of accessing the insolation DB 110, of reading out required insolation data, and of providing the read insolation data to the user.

The agent using weather information is a company using the insolation data and relevant information relevant to the insolation data. The agent using weather information is capable of receiving the provision of the insolation data and the relevant information relevant to the insolation data from the server 50 by using the terminal device 10.

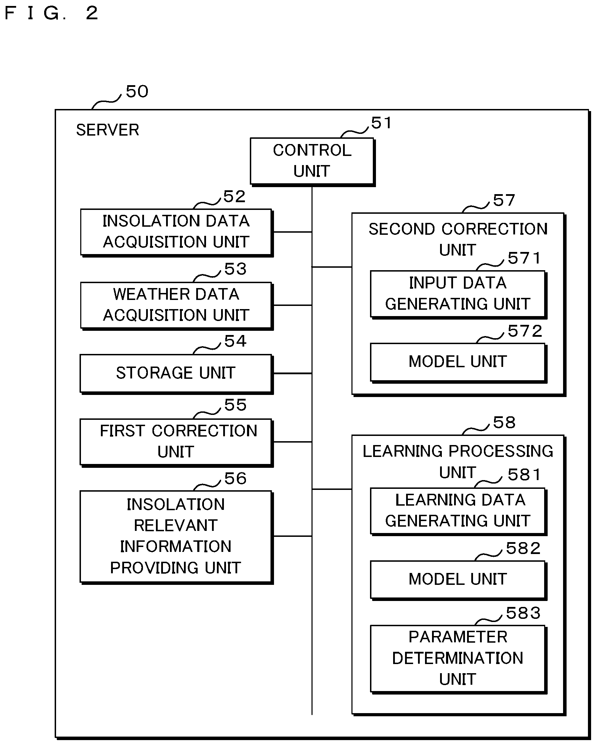

FIG. 2 is a block diagram illustrating an example of the configuration of the server 50. The server 50 includes a control unit 51 controlling the entire server, an insolation data acquisition unit 52, a weather data acquisition unit 53, a storage unit 54, a first correction unit 55, an insolation-relevant information providing unit 56, a second correction unit 57, and a learning processing unit 58. The first correction unit 55 and the second correction unit 57 are also collectively referred to as a correction unit. The second correction unit 57 includes an input data generating unit 571 and a model unit 572. The model unit 572 includes a semiconductor memory, a hard disk, or the like, and stores a model generated by machine learning (a learned model). The learning processing unit 58 includes a learning data generating unit 581, a model unit 582, and a parameter determination unit 583. The model unit 582 includes a semiconductor memory, a hard disk, or the like, and stores a model before machine learning. The model generated by the learning processing unit 58 performing the machine learning can be stored in the model unit 572. Note that, a model during machine learning, a model for relearning, and a learned model may be stored in the model unit 582. In addition, the learning processing unit 58 may not be an essential constituent, and may be provided in another server performing learning processing. In addition, the server 50 may include a plurality of servers, and functions may be dispersed in each of the servers. In addition, only one of the first correction unit 55 and the second correction unit 57 may be included.

The control unit 51 may include a central processing unit (CPU), a read only memory (ROM), a random access memory (RAM), and the like. The storage unit 54 includes a semiconductor memory, a hard disk, or the like, and is capable of storing required data such as data obtained as a result of the processing in the server 50.

The insolation data acquisition unit 52 has a communication function on the communication network 1, and is capable of acquiring the insolation data from the management server 100 of the weather information service provider.

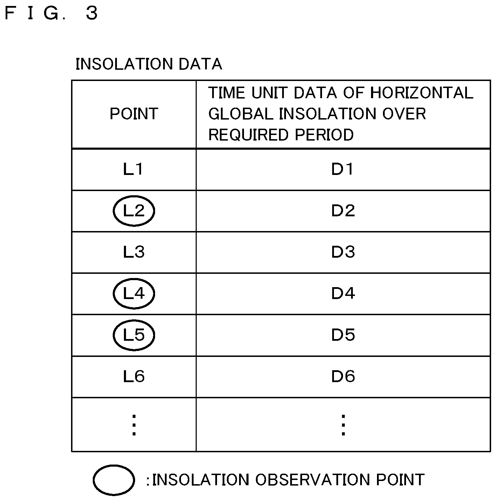

FIG. 3 is a schematic view illustrating an example of the insolation data. The insolation data can be time unit data of an insolation over a required period at one or a plurality of points. The insolation is the amount of radiant energy that is received from the sun for unit time in unit area, and the unit can be represented by [kWh/m²/h]. The insolation, for example, can be a horizontal global insolation obtained by measuring an insolation from the entire sky. The required period may be any one of a period in the past, a period from the past to the future, and a period in the future. As illustrated in FIG. 3, the insolation data may include insolation data D1 at a point L1, insolation data D2 at a point L2, insolation data D3 at a point L3, insolation data D4 at a point L4, insolation data D5 at a point L5, insolation data D6 at a point L6, and the like. In addition, the points L2, L4, L5, and the like are an observation point of the insolation, and an actually measured value of the insolation can also be acquired.

The weather data acquisition unit 53 is capable of accessing the weather data DB 61, and of acquiring the weather data from the weather data DB 61. In the weather data, for example, data observed in a weather observation station, data provided by a weather prediction business operator, or the like can be used. The weather data can be stored in advance in the weather data DB 61. In addition, the weather data may be acquired as needed, and may be stored in the weather data DB 61. The weather data may include a physical amount affected by the cloud and a physical amount having a correlative relationship with the cloud, and includes not only data that can be directly observed but also data obtained by processing the observed data.

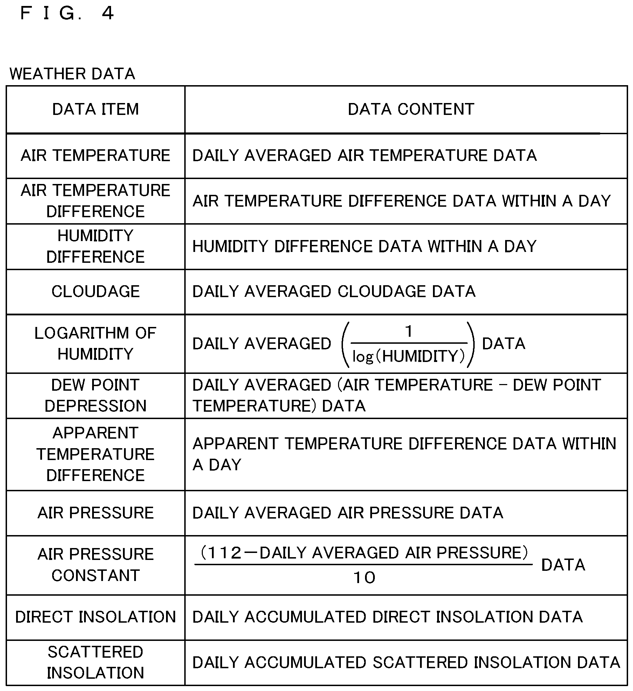

FIG. 4 is an explanatory diagram illustrating an example of the weather data. As illustrated in FIG. 4, the weather data, for example, includes an air temperature, an air temperature difference, a humidity difference, a cloudage, the logarithm of the humidity, dew-point depression, an apparent temperature difference, an air pressure, an air pressure constant, a direct insolation, a scattered insolation, and the like. The weather data may be day unit, or may be time unit. The air temperature can be daily-averaged air temperature data. The air temperature difference can be air temperature difference data within a day. The humidity difference can be humidity difference data within a day. The cloudage is a ratio of the cloud to the entire sky, and can be daily-averaged cloudage data. The logarithm of the humidity can be logarithmic data of daily-averaged humidity represented by {1/log (Humidity)}. The dew-point depression can be daily-averaged data represented by (Air Temperature - Dew-Point Temperature). Note that, the dew-point depression may be a difference between an air temperature at a certain latitude and a certain altitude and a dew-point temperature at the latitude and the altitude. Note that, a physical property value from which the dew-point depression can be calculated may be used instead of the dew-point depression. The apparent temperature difference (a heat index difference) can be apparent temperature difference data within a day. The air pressure can be daily-averaged air pressure data above sea level. The air pressure constant can be data defined by an expression of {Predetermined Value a1 - [Air Pressure above Sea Level]/Constant a2}. Specifically, as illustrated in the drawings, for example, a1 = 112, a2 = 10, the air pressure above sea level can be a daily-averaged air pressure. Note that, the predetermined value a1 and the constant a2 are not limited to the example of the drawings. The direct insolation is an insolation from only a range of the photosphere of the sun within the entire sky, and can be daily accumulated direct insolation data. The scattered insolation is an insolation from a range other than the photosphere of the sun within the entire sky, and can be daily accumulated scattered insolation data.

Next, an insolation correction method of this embodiment will be described. In this embodiment, insolation correction may be performed by only the first correction unit 55, may be performed by only the second correction unit 57, or may be performed by combining the first correction unit 55 and the second correction unit 57.

First, the insolation correction method by the first correction unit 55 will be described.

The first correction unit 55 is capable of correcting the acquired insolation data, on the basis of the acquired weather data. In the acquired insolation data, the influence of the cloud, the rain, the fog, and the like on the insolation is not sufficiently considered, but the influence of the cloud, the rain, the fog, and the like can be considered by correcting the acquired insolation data with the weather data, and thus, insolation data having a small deviation from the actually measured value can be provided. In addition, in a case where the acquired insolation data is a future prediction, future insolation data can be corrected by acquiring future weather data.

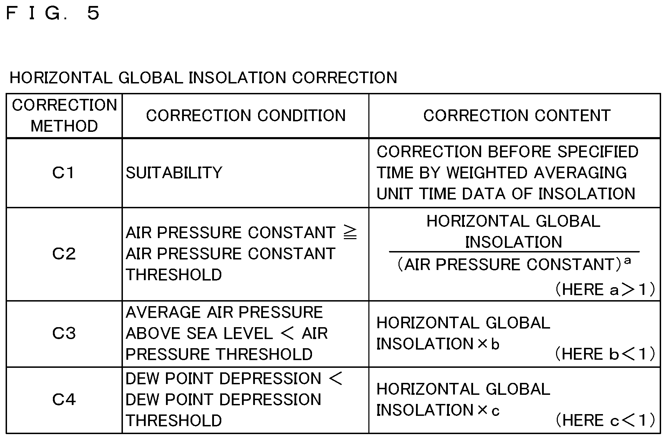

FIG. 5 is an explanatory diagram illustrating an example of the insolation correction method by the first correction unit 55. A correction method C1 can be suitably performed. The insolation data and the weather data that are provided by the weather information service provider may include an error due to a time lag from the actually measured value, which affects the accuracy of the insolation correction other than the correction method C1. In a case where insolation data before correction is acquired, the first correction unit 55 corrects the time lag of the insolation data. Specifically, the first correction unit 55 delays a time axis by a required time by weighted-averaging unit time data of the insolation (for example, data for each hour). The required time, for example, can be set to before 20 minutes, but is not limited thereto. The weight of the weighted average is determined in accordance with a ratio of a difference from the data for each hour before and after the delayed time, but is not limited thereto.

In a correction method C2, in a case where the air pressure constant is an air pressure constant threshold value or more, the first correction unit 55 corrects the insolation data before correction. In a case where the air pressure constant is {112 - [Air Pressure above Sea Level]/10} the air pressure constant threshold value, for example, can be 1. The air pressure constant increases as the air pressure above sea level decreases. In a case where the air pressure constant is the air pressure constant threshold value or more, the land surface part is at a low air pressure, and the air flows to the land surface part from a portion at a higher air pressure, and thus, convection occurs, and the cloud occurs. Accordingly, it is considered that it is necessary to consider the influence of the cloud, and it is necessary to correct the acquired insolation data. The insolation data can be corrected by dividing the horizontal global insolation by the a-th power (of the air pressure constant). Here, Exponent a > 1. The exponent a, for example, can be a = 1.1, a = 1.2, a = 1.3, and the like. Since a prediction algorithm of the insolation data may be different in accordance with a supply source of the insolation data, the exponent a may be suitably changed in accordance with the supply source of the insolation data. Note that, in a case where the air pressure constant is less than the air pressure constant threshold value, it is not necessary to correct the insolation data.

In a correction method C3, in a case where the average air pressure above sea level is less than the air pressure threshold value, the first correction unit 55 corrects the insolation data before correction. In a case where the air pressure above sea level is the air pressure threshold value (for example, 101 kPa or the like) or less, the land surface part is at a low air pressure, and the air flows to the land surface part from a part at a higher air pressure, and thus, convection occurs, and the cloud occurs. Accordingly, it is considered that it is necessary to consider the influence of the cloud, and it is necessary to correct the acquired insolation data. The insolation data can be corrected by multiplying the insolation data and a predetermined coefficient b (here, b < 1, for example, b = 0.95, b = 0.90, b = 0.85, and the like). Since the prediction algorithm of the insolation data may be different in accordance with the supply source of the insolation data, the coefficient b may be suitably changed in accordance with the supply source of the insolation data. Note that, in a case where the average air pressure is the air pressure threshold value or more, it is not necessary to correct the insolation data.

In a correction method C4, in a case where the dew-point depression is less than the dew-point depression threshold value, the first correction unit 55 corrects the insolation data before correction. In a case where the dew-point depression is greater than the dew-point depression threshold value, the dew-point depression is large, and thus, the humidity is low, and it is considered that it is not necessary to consider the influence of the cloud. On the other hand, in a case where the dew-point depression is less than the dew-point depression threshold value, the dew-point depression is small, and thus, the humidity is high, and it is considered that the rain or the fog occurs in the region, and it is considered that it is necessary to correct the acquired insolation data. The insolation data can be corrected by multiplying the insolation data and a predetermined coefficient c (here, c < 1, for example, c = 0.98, c = 0.95, c = 0.90, and the like). Since the prediction algorithm of the insolation data may be different in accordance with the supply source of the insolation data, the coefficient c may be suitably changed in accordance with the supply source of the insolation data.

All of the correction methods C1 to C4 described above may be simultaneously performed insofar as a correction condition is satisfied, and only a part thereof may be performed. In particular, since the correction methods C1 and C2 are more effective to decrease the deviation from the actually measured value than the correction methods C3 and C4, the correction methods C1 and C2 may be performed, and in order to further decrease the deviation, the correction methods C1 to C4 may be performed.

Next, the insolation correction method by the second correction unit 57 will be described.

The second correction unit 57 is capable of correcting the acquired insolation data, on the basis of the acquired weather data. In the acquired insolation data, the influence of the cloud, the rain, the fog, and the like on the insolation is not sufficiently considered, but the influence of the cloud, the rain, and the fog can be considered by correcting the acquired insolation data with the weather data, and thus, insolation data having a small deviation from the actually measured value can be provided. In addition, in a case where the acquired insolation data is a future prediction, the future insolation data can be corrected by acquiring the future weather data.

As described above, the second correction unit 57 includes the input data generating unit 571 and the model unit 572. Note that, herein, the model unit is synonymous with the model, and the model unit also includes the meaning of an aggregate of a plurality of models. The model unit 572 is a machine-learned model, and for example, can be configured by a neural network. In the model unit 572, a relationship between an input variable and an output variable is formulated, and is generated by machine learning with the insolation data and the weather data as the input variable and insolation data after correction as the output variable. In a case where the insolation data and the weather data are input, the model unit 572 is capable of outputting the insolation data after correction.

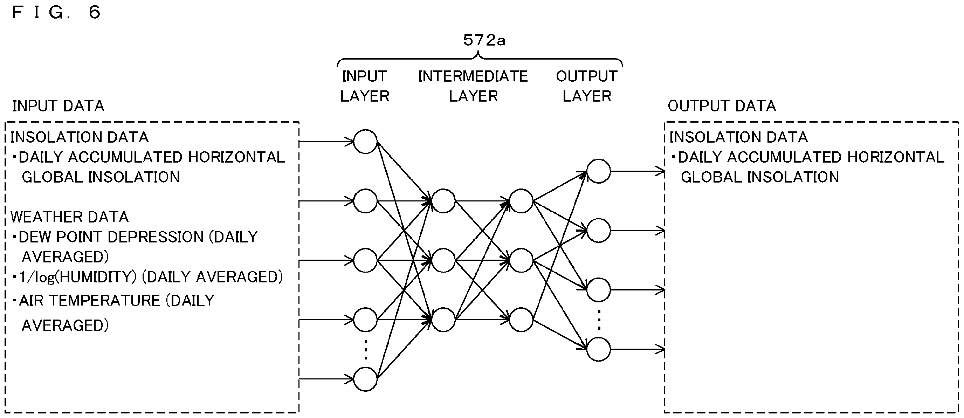

FIG. 6 is a schematic view illustrating a first example of a daily accumulated insolation correction method by the second correction unit 57. A model 572a is configured by a neural network, and includes an input layer, an intermediate layer, and an output layer, in which parameters (the weight, the bias, and the like) of the neural network are determined by machine learning. The input data generating unit 571 generates the input data including a daily accumulated horizontal global insolation as the insolation data, and daily-averaged dew-point depression, daily-averaged {1/log (Humidity)}, and a daily-averaged air temperature as the weather data to the model 572a. The model 572a is capable of outputting the insolation data after correction (daily accumulated horizontal global insolation), as output data. Accordingly, the influence of the cloud can be considered, and insolation data having a small deviation from the actually measured value can be provided.

As described above, the insolation data after correction can be obtained by inputting the dew-point depression data to the model 572a. By setting the dew-point depression data as the input variable of the model 572a, it is possible to consider the influence of the rain, the fog, or the like on the insolation.

As described above, by inputting logarithmic data of humidity data to the model 572a, it is possible to obtain the insolation data after correction. By setting the logarithmic data of the humidity data as the input variable of the model 572a, it is possible to consider the influence of the cloud on the insolation. In addition, even though it is not illustrated in FIG. 6, it is possible to obtain the insolation data after correction by inputting cloudage data to the model 572a. By setting the cloudage data as the input variable of the model 572a, it is possible to consider the influence of the cloud on the insolation.

The insolation data that is input to the model 572a can be insolation data that is acquired from the weather information service provider and is not corrected, but is not limited thereto. For example, corrected insolation data subjected to all or a part of the correction methods C1 to C4 by the first correction unit 55 described above. That is, the corrected insolation data is included as the input variable of the model 572a. The insolation data may be corrected on the basis of the weather data, or the insolation data may be weighted-averaged in time unit to correct the time lag. By inputting the corrected insolation data to the model 572a, the model 572a further corrects the corrected insolation data, and thus, a correction accuracy can be further improved.

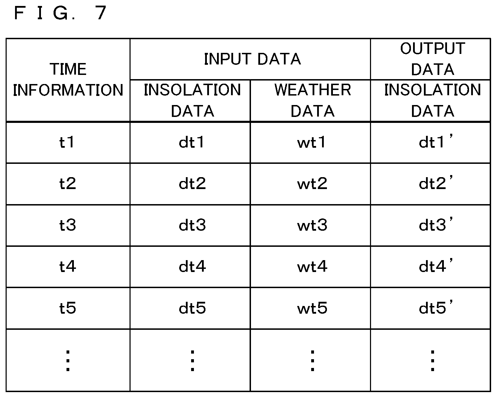

FIG. 7 is a schematic view illustrating the relationship between the input data and the output data. Time information t1, t2, t3, t4, t5, or the like may be in time unit, or may be in day unit. In a case of the time unit, t1 to t24 indicate 24 hours, and in a case of the day unit, t1 to t30 indicate 30 days. In a case where insolation data dt1 and weather data wt1 in time information t1 are input, insolation data dt1' after correction in the time information t1 is output. The same applies to the time information t2, t3, or the like. A correction period (required period) in which the insolation data is corrected may be several hours, may be several days, may be several months, or may be several years. The correction period may be a period in the past, may be a period in the future, or may be a period from the past to the future. In a case where the insolation data before correction is future prediction data, the model 572a is capable of outputting prediction data of the insolation data after correction. Note that, in such a case, the future prediction data may be also used in the weather data. In addition, in a case where the insolation data is in time unit, and the weather data is in day unit, weather data in day unit with the same value may be assigned to each of the time information pieces t1 to t24.

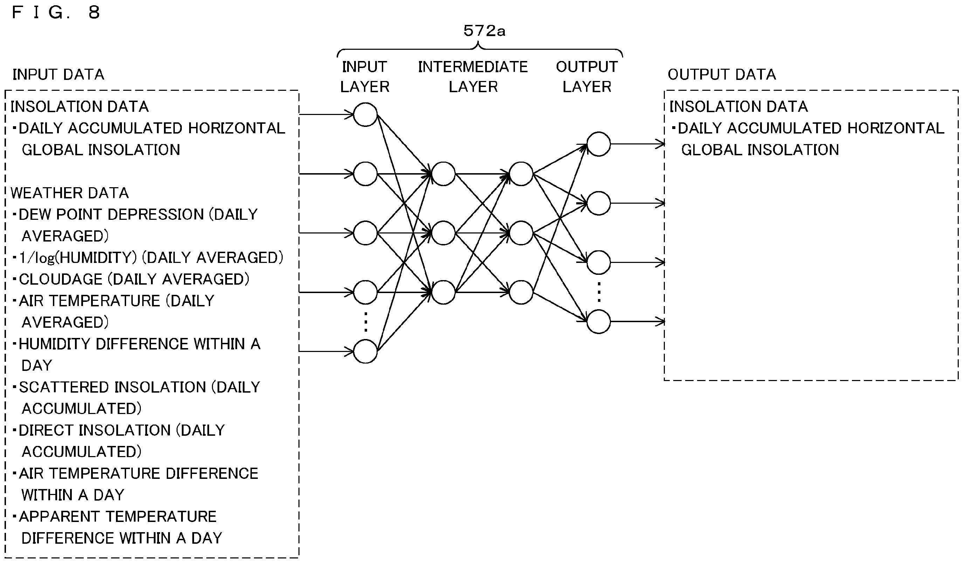

FIG. 8 is a schematic view illustrating a second example of the daily accumulated insolation correction method by the second correction unit 57. A difference from the first example illustrated in FIG. 6 is that the humidity difference within a day, the daily accumulated scattered insolation, the daily accumulated direct insolation, the daily-averaged cloudage, the air temperature difference within a day, and the apparent temperature difference within a day are included in the weather data of the input data. Note that, the weather data to be input may be a part of the humidity difference within a day, the daily accumulated scattered insolation, the daily accumulated direct insolation, the daily-averaged cloudage, the air temperature difference within a day, and the apparent temperature difference within a day. In addition, even though it is not illustrated, a combination of air temperature data and dew-point temperature data, a combination of air temperature data and wind-chill temperature data, a combination of air temperature data and apparent temperature data, or a combination of air temperature data and heat index data may be included in the weather data to be input. Accordingly, it is possible to consider the further influence of the cloud or the like, and to provide insolation data in which a deviation from the actually measured value is further decreased.

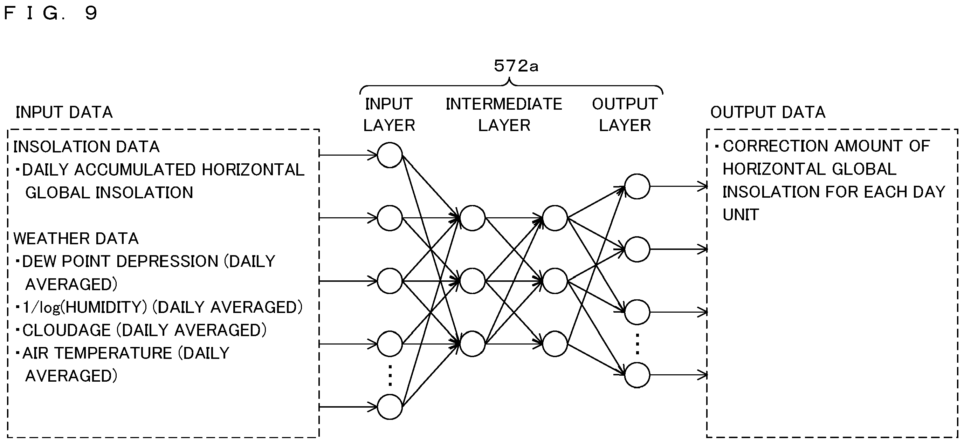

FIG. 9 is a schematic view illustrating a third example of the daily accumulated insolation correction method by the second correction unit 57. A difference from the first example illustrated in FIG. 6 is that a correction amount for each day unit with respect to the insolation data before correction (a difference obtained by subtracting an insolation before correction from an insolation after correction) is output instead of outputting the insolation data after correction (daily accumulated horizontal global insolation) itself.

The corrected insolation data can be recorded in the insolation data DB 62.

Next, a model generating method (model learning method) will be described.

As described above, the learning processing unit 58 includes the learning data generating unit 581, the model unit 582, and the parameter determination unit 583. The model unit 582 stores the model before machine learning. Note that, a model in the middle of the machine learning or a model to be subjected to relearning may be stored in the model unit 582. The model, for example, can be configured by a neural network including an input layer, an intermediate layer, and an output layer. In the model before machine learning, parameters of the neural network are undetermined.

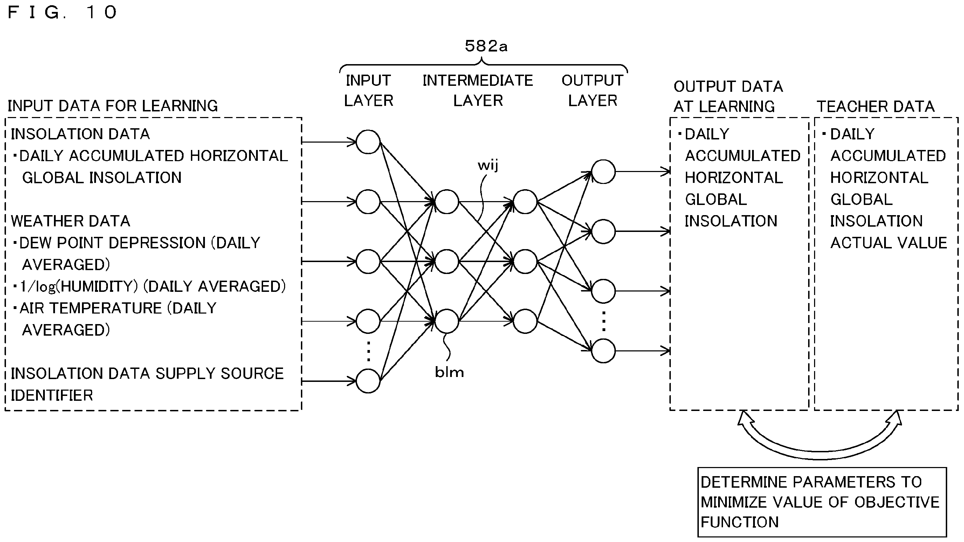

FIG. 10 is a schematic view illustrating an example of a method for generating a model 582a. The learning processing unit 58 is capable of generating a model with the insolation data before correction and the weather data as an input variable and the insolation data after correction as an output variable. Specifically, the learning data generating unit 581 generates learning data including the daily accumulated horizontal global insolation as the insolation data, the daily-averaged dew-point depression, the daily-averaged {1/log (Humidity)}, and the daily-averaged air temperature as the weather data, and an identifier for identifying a supply source of the insolation data to be input to the model 582a. The parameter determination unit 583 adjusts the parameters (weight wij and bias blm) of the neural network such that a difference between the output data at learning that is output by the model 582a (the daily accumulated horizontal global insolation) and the actually measured value of the daily accumulated horizontal global insolation as teacher data decreases. For the difference between the output data at learning and the teacher data, an objective function (or a loss function) may be determined in advance, and the parameters may be adjusted such that the value of the objective function decreases. The parameter determination unit 583 is capable of determining the parameters when the difference between the output data at learning and the teacher data is minimized. Note that, the model generated by the model generating method illustrated in FIG. 10 corresponds to the model illustrated in FIG. 6. The model generating method illustrated in FIG. 8 may add the humidity difference within a day, the daily accumulated scattered insolation, the daily accumulated direct insolation, the daily-averaged cloudage, the air temperature difference within a day, and the apparent temperature difference within a day, as input data for learning.

In the relearning of the model, the learned model may be learned again, or relearning may be performed from the beginning by using initial parameters. For example, in a case where the model is learned for each specific trigger, learning can be performed from the beginning by using the learning data in the past. The specific trigger, for example, may be when updating a weather satellite.

Examples of a machine learning method may include linear regression, ridge regression, Lasso regression, an elastic net, and the like, as a linear model, and may include a k-nearest neighbor method, a regression tree, random forest, gradient boosting, support vector regression, projection pursuit regression, Gaussian process regression, and the like other than a neural network, as a non-linear model. Note that, a non-linear regression model is more preferable than a linear regression model.

It is not necessary that the models that are generated by machine learning are uniform. Since the insolation data that is provided from the weather information service provider is generated by the weather information service provider using the individual prediction model, data feature of the insolation data to be predicted may be different in accordance with the prediction model to be used. Therefore, a model intrinsic to each of the weather information service providers can be generated.

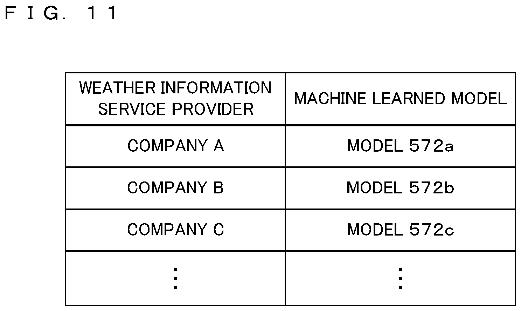

FIG. 11 is an explanatory diagram illustrating a correspondence relationship between the weather information service provider and the machine-learned model. As illustrated in FIG. 11, the model 572a can be used for insolation data that is provided from a company A, a model 572b can be used for insolation data that is provided from a company B, and a model 572c can be used for insolation data that is provided from a company C. The models 572a, 572b, 572c, and the like can be stored in the model unit 572 in association with the weather information service provider.

In a case of receiving the selection of a required weather information service provider among the plurality of weather information service providers, the second correction unit 57 is capable of correcting the acquired insolation data by using a model corresponding to the selected weather information service provider. The insolation data that is provided from the company A can be corrected by using the model 572a for the company A. Similarly, the insolation data that is provided from the company B can be corrected by using the model 572b for the company B, and the insolation data that is provided from the company C can be corrected by using the model 572c for the company C. Accordingly, even in a case where the business operator of the supply source of the insolation data is different, the insolation data can be suitably corrected. Note that, in the example described above, the model associated with the weather information service provider is generated and used, but a model associated with the prediction model that is used in the prediction of the insolation data may be generated and used.

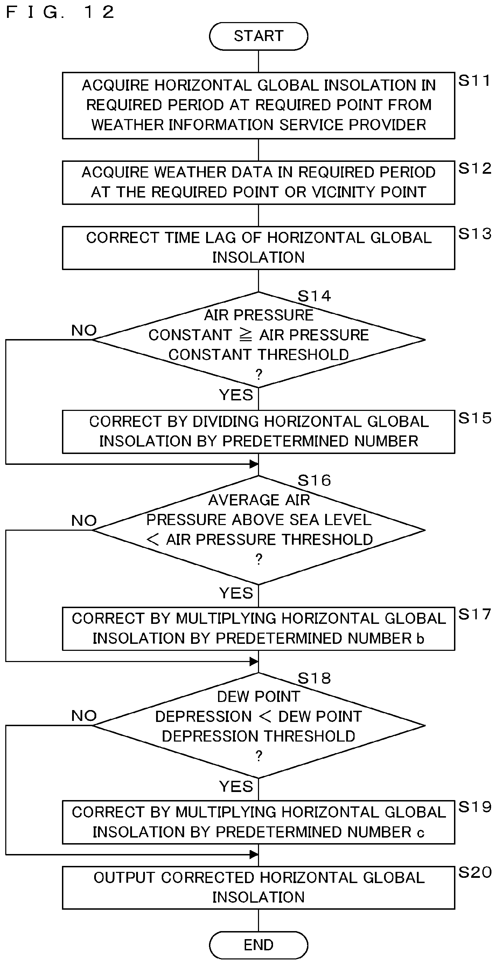

FIG. 12 is a flowchart illustrating a first example of insolation correction processing by the server 50. Hereinafter, for convenience, the control unit 51 will be described as the subject of the processing. FIG. 12 illustrates correction processing using the first correction unit 55. The control unit 51 acquires a horizontal global insolation in a required period (a correction period) at a required point from the weather information service provider (S11), and acquires weather data in the required period at the required point or at a point in the vicinity thereof (S12). In a case where there is no weather data at a required time point, the control unit may acquire weather data at a point closest to the required point or a point with an approximate weather condition.

As with the correction method C1, the control unit 51 corrects a time lag of the horizontal global insolation (S13), and determines whether or not an air pressure constant is an air pressure constant threshold value or more (S14). In a case where the air pressure constant is the air pressure constant threshold value or more (YES in S14), as with the correction method C2, the control unit performs correction by dividing the horizontal global insolation by a predetermined number (S15). In a case where the air pressure constant is not the air pressure constant threshold value or more (NO in S14), the control unit 51 performs the processing of step S16 described below.

The control unit 51 determines whether or not an air pressure above sea level is less than an air pressure threshold value (S16), and in a case where the air pressure above sea level is less than the air pressure threshold value (YES in S16), as with the correction method C3, the control unit performs correction by multiplying the horizontal global insolation and a predetermined number b (S17). In a case where the air pressure above sea level is not less than the air pressure threshold value (NO in S16), the control unit 51 performs the processing of step S18 described below.

The control unit 51 determines whether or not dew-point depression is less than a dew-point depression threshold value (S18), and in a case where the dew-point depression is less than the dew-point depression threshold value (YES in S18), as with the correction method C3, the control unit performs correction by multiplying the horizontal global insolation and a predetermined number c (S19), outputs the corrected horizontal global insolation (S20), and ends the processing. In a case where the dew-point depression is not less than the dew-point depression threshold value (NO in S18), the control unit 51 performs the processing of step S20.

Note that, all or only a part of the processing of each of step S13, steps S14 and S15, steps S16 and S17, steps S18 and S19 may be performed.

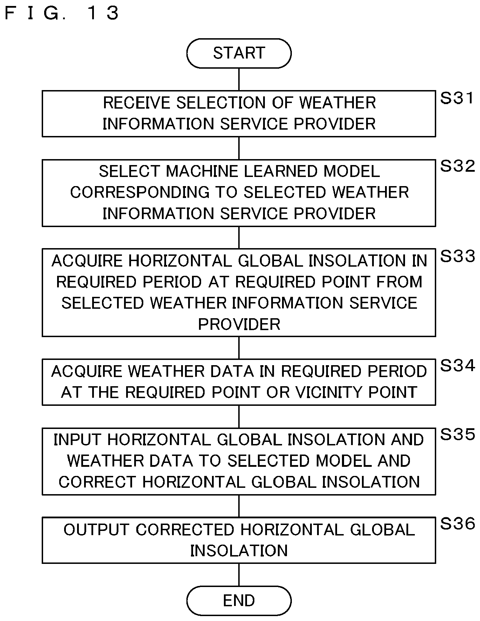

FIG. 13 is a flowchart illustrating a second example of the insolation correction processing by the server 50. FIG. 13 illustrates correction processing using the second correction unit 57. The control unit 51 receives the selection of the weather information service provider (S31), and selects a machine-learned model corresponding to the selected weather information service provider from the model unit 572 (S32).

The control unit 51 acquires a horizontal global insolation in a required period (a correction period) at a required point from the selected weather information service provider (S33), and acquires weather data in the required period at the required point or at a point in the vicinity thereof (S34).

The control unit 51 inputs the horizontal global insolation and the weather data to the selected model and corrects the horizontal global insolation (S35), outputs the corrected horizontal global insolation (S36), and ends the processing.

Note that, the insolation correction may be performed by performing only the processing illustrated in FIG. 12, or the insolation correction may be performed by performing only the processing illustrated in FIG. 13. In addition, both of the insolation correction processing illustrated in FIG. 12 and the insolation correction processing illustrated in FIG. 13 may be performed.

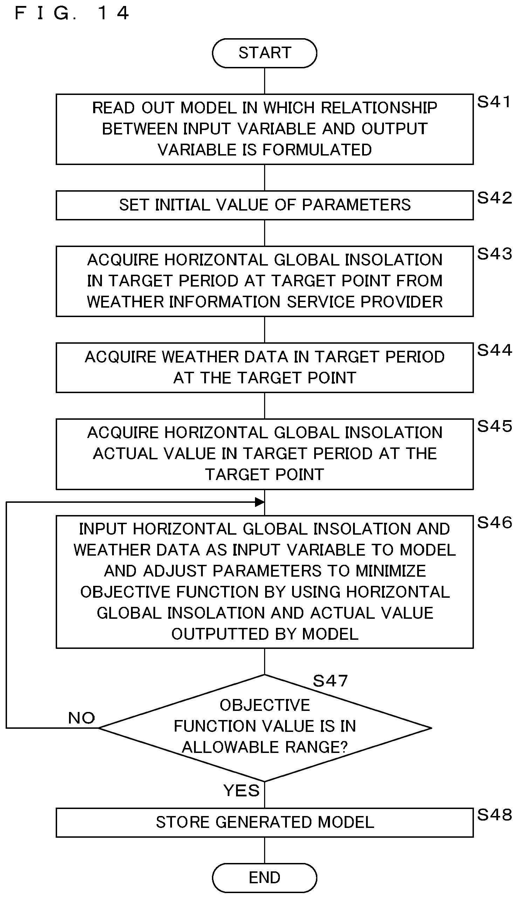

FIG. 14 is a flowchart illustrating an example of model generating processing by the server 50. The control unit 51 reads out a model in which a relationship between an input variable and an output variable is formulated from the model unit 582 (S41), and sets the initial values of parameters (weight, bias, and the like) (S42). The control unit 51 acquires a horizontal global insolation in a target period at a target point from the weather information service provider (S43), and acquires weather data in the target period at the target point (S44). The target point can be a point when an actually measured value can be obtained by observing the horizontal global insolation, and it is preferable that there are a plurality of points.

The control unit 51 acquires actually measured data of the horizontal global insolation in the target period at the target point (S45), inputs the horizontal global insolation and the weather data as the input variable to the model, and adjusts the parameters (the weight, the bias, and the like) such that the value of an objective function is minimized by using the horizontal global insolation and the actually measured data that are output by the model (S46).

The control unit 51 determines whether or not the value of the objective function is in an allowable range (S47), and in a case where the value of the objective function is not in the allowable range (NO in S47), the control unit continues the processing subsequent to step S46. In a case where the value of the objective function is in the allowable range (YES in S47), the control unit 51 stores the generated model in the model unit 572 (S48), and ends the processing.

Next, an evaluation result of the insolation correction method of this embodiment will be described.

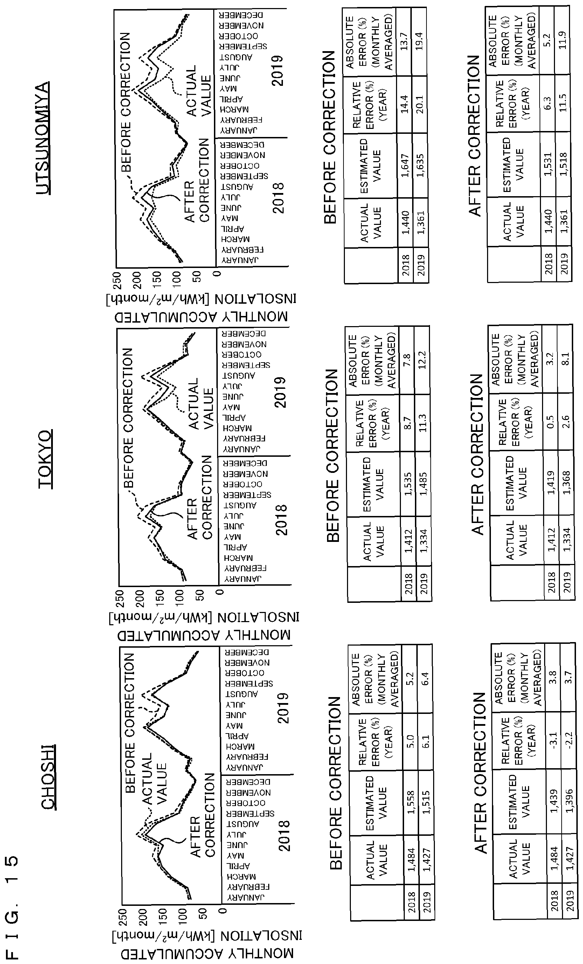

FIG. 15 is an explanatory diagram illustrating an example of a correction result of the horizontal global insolation by the first correction unit 55. Examples of an evaluation point include three points of Choshi, Tokyo, and Utsunomiya. Upper graphs represent a monthly accumulated insolation [kWh/m²/month], and illustrate an insolation before correction, an insolation after correction, and an actually measured value of the insolation (data of Japan Meteorological Agency), respectively. Lower tables show an insolation before correction and an insolation after correction in year unit (in 2018 and in 2019) by respectively comparing with the actually measured value of the insolation (data of Japan Meteorological Agency). As illustrated in FIG. 15, it is found that a deviation between the insolation after correction and the actually measured value of the insolation is smaller than a deviation between the insolation before correction and the actually measured value of the insolation at any point, and thus, a prediction accuracy of the horizontal global insolation can be improved.

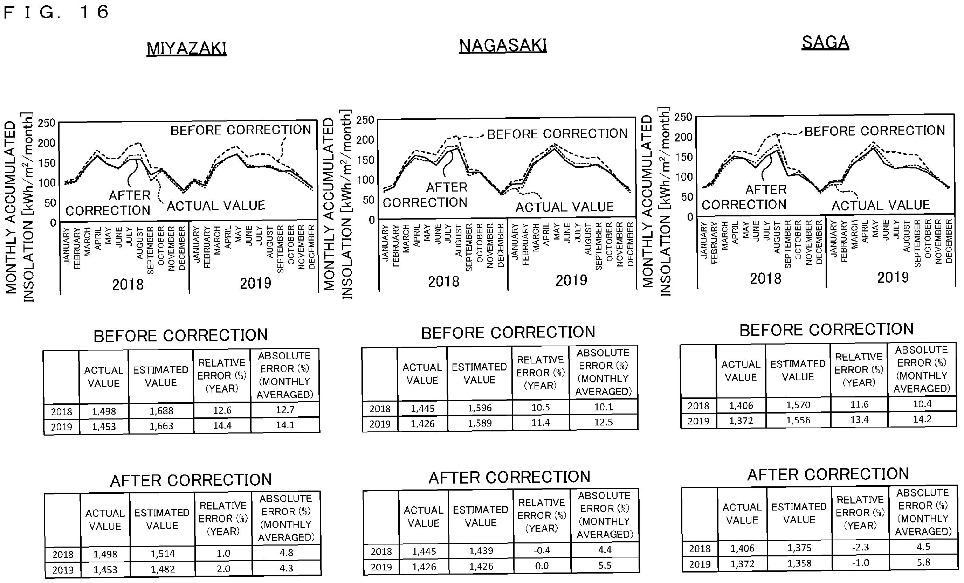

FIG. 16 is an explanatory diagram illustrating an example of a correction result of the horizontal global insolation by the second correction unit 57. Examples of an evaluation point include three points of Miyazaki, Nagasaki, and Saga. Upper graphs represent a monthly accumulated insolation [kWh/m²/month], and illustrate an insolation before correction, an insolation after correction, and an actually measured value of the insolation (data of Japan Meteorological Agency), respectively. Lower tables show an insolation before correction and an insolation after correction in year unit (in 2018 and in 2019) by respectively comparing with an actually measured value of the insolation (data of Japan Meteorological Agency). As illustrated in FIG. 16, it is found that a deviation between the insolation after correction and the actually measured value of the insolation is smaller than a deviation between the insolation before correction and the actually measured value of the insolation at any point, and thus, the prediction accuracy of the horizontal global insolation can be improved.

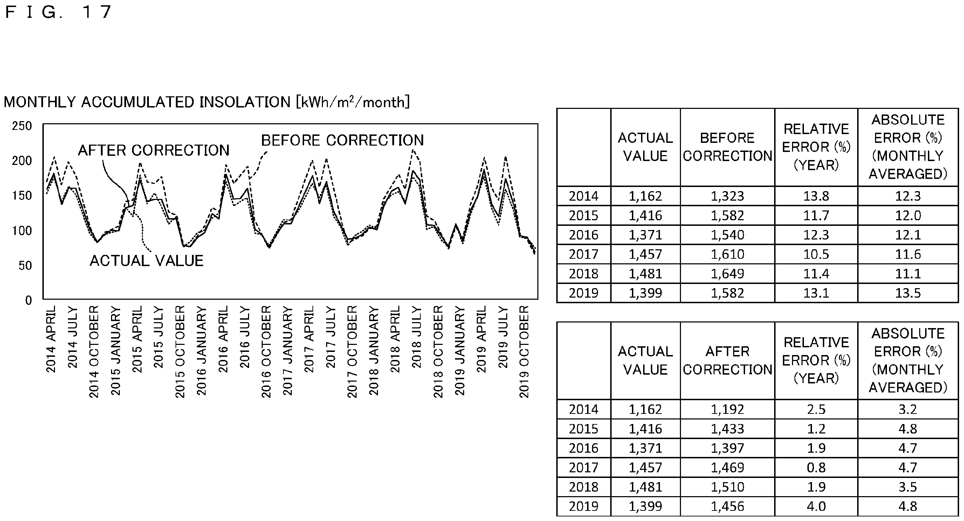

FIG. 17 is an explanatory diagram illustrating an example of a correction result of an oblique insolation by the second correction unit 57. The oblique insolation can be obtained, for example, by using known means such as METPV-11, on the basis of a horizontal global insolation and an obliquity angle of an oblique plane. An evaluation point is Mobara in which a photovoltaic power plant is provided. A left graph represents a monthly accumulated insolation [kWh/m²/month], and illustrates an insolation before correction, an insolation after correction, and an actually measured value of the insolation, respectively. Right tables show an insolation before correction and an insolation after correction in year unit from 2014 to 2019 by respectively comparing with an actually measured value of the insolation (data of Japan Meteorological Agency). The obliquity angle of the oblique plane is 10 degrees. As illustrated in FIG. 17, it is found that a deviation between the insolation after correction and the actually measured value of the insolation is smaller than a deviation between the insolation before correction and the actually measured value of the insolation, and thus, a prediction accuracy of the oblique insolation can be improved, which can be preferably used in the calculation of a power generation amount of a photovoltaic power plant.

The server 50 of this embodiment can be used in the provision of various services relevant to an insolation. Hereinafter, a service that can be provided by the server 50 will be described.

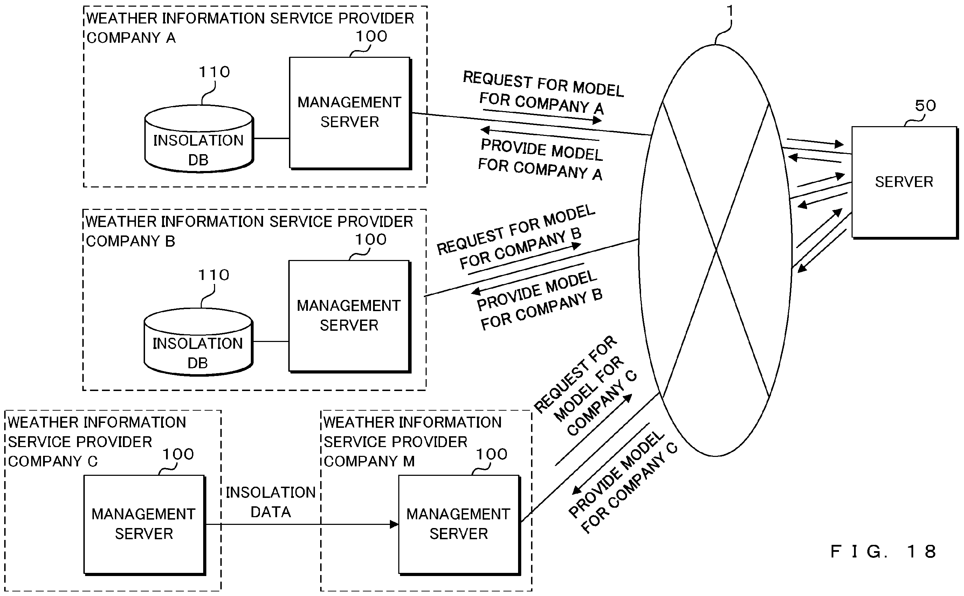

FIG. 18 is a schematic view illustrating an example of a model providing method by the server 50. As exemplified in FIG. 11, the server 50 stores a plurality of different models generated by machine learning in the model unit 572. As illustrated in FIG. 18, in a case where a request for a model for a company A is received from the company A, the server 50 is capable of providing the model for a company A to the management server 100 of the company A. The management server 100 of the company A is capable of correcting the insolation data recorded in the insolation DB 110 by using the provided model and of predicting the insolation. Similarly, in a case where a request for a model for a company B is received from the company B, the server 50 is capable of providing the model for a company B to the management server 100 of the company B. The management server 100 of the company B is capable of correcting the insolation data recorded in the insolation DB 110 by using the provided model and of predicting the insolation. In addition, in a case where a request for a model for a company C is received from a company M, the server 50 is capable of providing the model for a company C to the management server 100 of the company M. The management server 100 of the company M is capable of correcting the insolation data acquired from the company C by using the provided model and of predicting the insolation.

As described above, in a case where the weather information service provider performs a service for providing the insolation data by using the individual prediction model, it is possible to support the improvement of the accuracy of the insolation data to be provided. In addition, in a case where the weather information service provider receives the provision of the insolation data from another person, it is possible to improve the accuracy of the provided insolation data.

The insolation-relevant information providing unit 56 is capable of generating the relevant information relevant to the insolation and of providing the relevant information, for example, the agent using weather information. The agent using weather information is capable of displaying the relevant information by using the terminal device 10. Hereinafter, a specific example will be described.

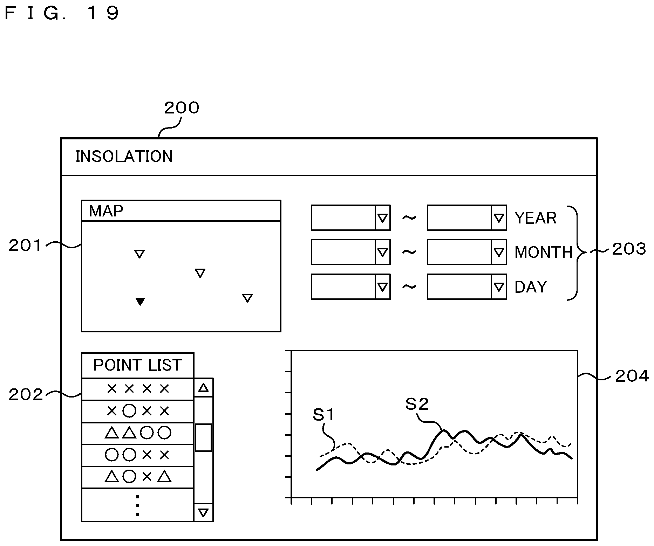

FIG. 19 is a schematic view illustrating a first display example of the insolation that is provided by the server 50. The terminal device 10 is capable of displaying an insolation screen 200. In the insolation screen 200, the user is capable of selecting a required point on a map screen 201. Alternatively, the required point can be selected on a point list screen 202, instead of the map screen 201. The user is capable of further selecting a required period (for example, Year OO to Year OO, Month OO to Month OO, Day OO to Day OO, and the like) on the period selection region 203. The point and the period selected by the terminal device 10 are transmitted to the server 50 together with a request for the relevant information. The server 50 is capable of providing insolation data in the selected period at the selected point. The terminal device 10 is capable of displaying the insolation data on an insolation screen 204. In the illustrated example, points S1 and S2 are selected, and the transition of insolation data at the points S1 and S2 is displayed.

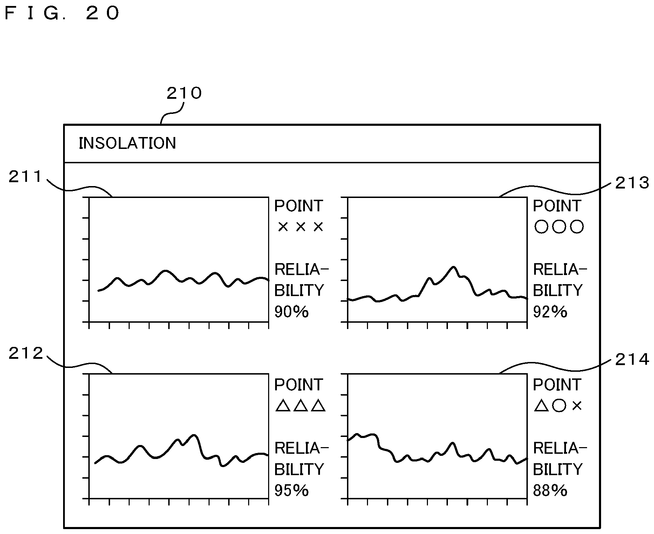

FIG. 20 is a schematic view illustrating a second display example of the insolation that is provided by the server 50. The terminal device 10 is capable of displaying an insolation screen 210. In the insolation screen 210, insolation data at four different points can be displayed on each of insolation screens 211, 212, 213, and 214, and the reliability of the insolation data can also be displayed. The reliability may be calculated in advance by the server 50, on the basis of a deficit rate of the weather data used when correcting the insolation data or a determination coefficient (R²) used as an evaluation index of the model. The user is capable of grasping insolations at a plurality of points simultaneously, and is also capable of grasping the reliability of the insolation data.

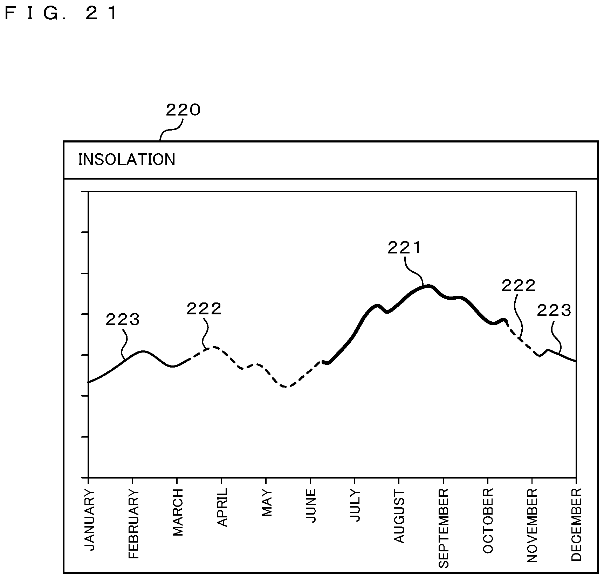

FIG. 21 is a schematic view illustrating a third display example of the insolation that is provided by the server 50. The terminal device 10 is capable of displaying an insolation screen 220. In the insolation screen 220, the transition of the insolation at the required point is displayed in different display modes. For example, a transition represented by a reference numeral 221 indicates a high accuracy, a transition represented by a reference numeral 223 indicates a low accuracy, and a transition represented by a reference numeral 222 indicates a moderate accuracy. Accordingly, in a case where there is a difference in the accuracy in the transition of the insolation data, the user is capable of immediately grasping the degree of accuracy in which period.

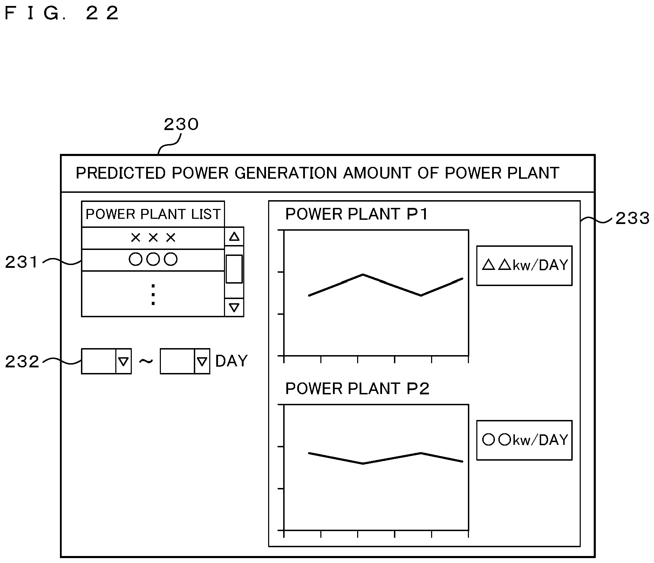

FIG. 22 is a schematic view illustrating a display example of a predicted power generation amount of a power plant that is provided by the server 50. The terminal device 10 is capable of displaying a predicted power generation amount screen 230 of the power plant. In the predicted power generation amount screen 230, the user is capable of selecting a required power plant on a power plant list screen 231. The user is capable of further selecting a prediction period (for example, Month OO to Month OO, and the like) in a period selection region 232. The power plant and the prediction period selected by the terminal device 10 are transmitted to the server 50 together with the request for the relevant information. The server 50 is capable of obtaining insolation data in the selected power plant in the selected prediction period.

The insolation-relevant information providing unit 56 is capable of calculating the predicted power generation amount, on the basis of the insolation data. Specifically, a daily power generation amount can be calculated by an expression of {Power Generation Amount = System Capacity × Daily Insolation × Loss Coefficient} using a system capacity of the power plant (the maximum output of an electric power facility), and a loss coefficient. The server 50 is capable of providing the calculated power generation amount to the terminal device 10.

The terminal device 10 is capable of displaying the transition of the power generation amount of the selected power plant (in the illustrated example, power plants P1 and P2) and a daily average power generation amount on a power generation amount display screen 233.

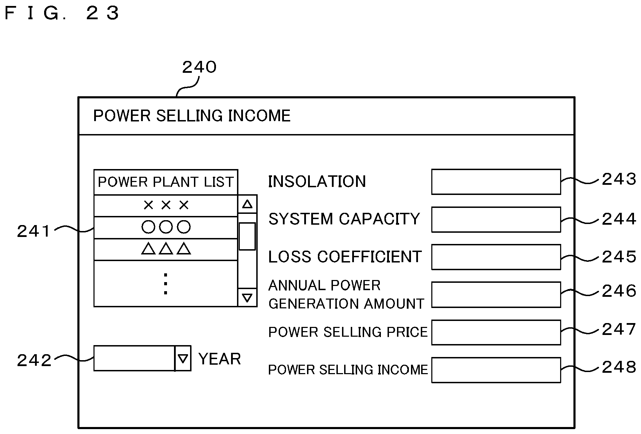

FIG. 23 is a schematic view illustrating a display example of a power selling income of the power plant that is provided by the server 50. The terminal device 10 is capable of displaying a power selling income screen 240 of the power plant. In the power selling income screen 240, the user is capable of selecting a target power plant on a power plant list screen 241. The user is capable of further selecting a target period (for example, Year OO) in a period selection region 242. The power plant and the target period selected by the terminal device 10 are transmitted to the server 50 together with the request of the relevant information. The server 50 is capable of obtaining insolation data in the selected power plant in the selected target period.

The insolation-relevant information providing unit 56 is capable of providing an insolation, a system capacity, a loss coefficient, an annual power generation amount, a power selling price, and a power selling income in the selected power plant in the selected target period to the terminal device 10. The system capacity and the loss coefficient can be stored in advance in the storage unit 54 associated with the power plant. The annual power generation amount can be calculated by an expression of {System Capacity × Daily Insolation × Loss Coefficient × 365}. The power selling income can be calculated by an expression of {Annual Power Generation Amount × Power Selling Price}. In addition, a profit can be calculated by subtracting expenses from the power selling income.

The terminal device 10 is capable of displaying the insolation, the system capacity, the loss coefficient, the annual power generation amount, the power selling price, and the power selling income in display regions 243, 244, 245, 246, 247, 248, respectively.

By performing correction considering an albedo change in a snowfall accumulation period in combination with the correction of the correction unit of this embodiment (at least one of the first correction unit 55 and the second correction unit 57), it is possible to predict an oblique insolation in the snowfall accumulation period with the same accuracy as that in a period in which there is no accumulated snow. Specifically, in a case where the amount of accumulated snow and the amount of snowfall are recognized as a constant value, it is possible to further decrease an error of the insolation after correction by performing albedo (a numerical value is a specific value) correction when predicting the oblique insolation. The albedo is a reflective index of solar radiation, and a ratio of reflective radiation to incident radiation is set to the reflective index. The albedo of main substances for calibrating the land surface is as follows.
Accumulated Snow (New, Dry) 0.75 to 0.9
Accumulated Snow (Old, Wet) 0.4 to 0.6

Note that, the correction of the insolation based on the albedo change is not limited to a case where there is accumulated snow, and can also be performed in accordance with the albedo of an object on the land surface.

This embodiment can be applied to the agriculture field. For example, by providing a relationship between the past insolation and the yield of agricultural crops to a farm family, a society such as an agricultural cooperative society, or an agricultural business operator, and by providing the prediction of the insolation, it is possible to predict in advance the yield of the agricultural crops. In addition, by providing the future insolation, this embodiment can be used in the adjustment of a picking season, the prediction of disease spread in the agricultural crops, or the like.

An insolation correction method of this embodiment, includes: acquiring insolation data; acquiring weather data, and correcting the acquired insolation data, on the basis of the acquired weather data.

An insolation correction device of this embodiment, includes: a first acquisition unit acquiring insolation data; a second acquisition unit acquiring weather data; and a correction unit correcting the insolation data acquired by the first acquisition unit, on the basis of the weather data acquired by the second acquisition unit.

A computer program of this embodiment allows a computer to execute processing of: acquiring insolation data; acquiring weather data; and correcting the acquired insolation data, on the basis of the acquired weather data.

In the insolation correction method, the insolation data is acquired, and the weather data is acquired. The insolation data, for example, can be acquired from a management server or the like that is operated by a weather information service provider. The insolation data can be time unit data of an insolation over a required period at one or a plurality of points. The insolation is the amount of radiant energy that is received from the sun for unit time in unit area, and the unit can be represented by [kWh/m²/h]. The insolation, for example, can be a horizontal global insolation by measuring an insolation from the entire sky. The required period may be any one of a period in the past, a period from the past to the future, and a period in the future. In the weather data, for example, data observed in a weather observation station, data provided by a weather prediction business operator, or the like can be used. The weather data may include a physical amount affected by the cloud and a physical amount having a correlative relationship with the cloud, and includes not only data that can be directly observed but also data obtained by processing the observed data.

In the insolation correction method, the acquired insolation data is corrected on the basis of the acquired weather data. The influence of the cloud is not sufficiently considered in the acquired insolation data, but the influence of the cloud can be considered by correcting the acquired insolation data with the weather data, and it is possible to provide insolation data having a small deviation from the actually measured value.

In the insolation correction method of this embodiment, the acquired insolation data is corrected by using a model with the insolation data and the weather data as an input variable.

In the insolation correction method, the acquired insolation data is corrected by using the model with the insolation data and the weather data as the input variable. That is, in the model, the insolation data and the weather data are set as an input variable, insolation data after correction is set as an output variable, and a relationship between the input variable and the output variable is formulated. Note that, the insolation data after correction may be a difference from the acquired insolation data (insolation data before correction) (a difference between the insolation data after correction and the insolation data before correction). The model can be generated by machine learning. Accordingly, in a case where the insolation data and the weather data are input to the model, the insolation data after correction can be obtained.

In the insolation correction method of this embodiment, the input variable of the model includes dew-point depression data, and weather data including the dew-point depression data is acquired.

In the insolation correction method, the dew-point depression data is included as the input variable of the model, and the dew-point depression data is input to the model, and thus, the insolation data after correction can be obtained. Dew-point depression is a difference between an air temperature at a certain latitude and a certain altitude and a dew-point temperature at the latitude and the altitude. Since the humidity increases as the dew-point temperature increases, the humidity increases as the dew-point depression decreases. Note that, the dew-point depression may be a difference between the air temperature at a certain altitude and the dew-point temperature at the altitude. By setting the dew-point depression data as the input variable of the model, it is possible to consider the influence of the rain, the fog, or the like.

In the insolation correction method of this embodiment, the input variable of the model includes logarithmic data of humidity data, and weather data including the logarithmic data of the humidity data is acquired.

In the insolation correction method, the logarithmic data of the humidity data is included as the input variable of the model, and the logarithmic data of the humidity data is input to the model, and thus, the insolation data after correction can be obtained. The logarithmic data of the humidity data, for example, can be represented by {1/log (Humidity)}. By setting the logarithmic data of the humidity data as the input variable of the model, it is possible to consider the influence of the cloud.

In the insolation correction method of this embodiment, the input variable of the model includes at least one of air temperature data, air temperature difference data, humidity difference data or apparent temperature difference data, cloudage data, direct insolation data, a combination of air temperature data and dew-point temperature data, a combination of air temperature data and wind-chill temperature data, a combination of air temperature data and apparent temperature data, a combination of air temperature data and heat index data, and scattered insolation data in a predetermined period, and weather data including at least one of the air temperature data, the air temperature difference data, the humidity difference data or the apparent temperature difference data, the cloudage data, the direct insolation data, the combination of the air temperature data and the dew-point temperature data, the combination of the air temperature data and the wind-chill temperature data, the combination of the air temperature data and the apparent temperature data, the combination of the air temperature data and the heat index data, and the scattered insolation data in the predetermined period is acquired.

In the insolation correction method, at least one of the air temperature data, the air temperature difference data, the humidity difference data or the apparent temperature difference data, the cloudage data, the direct insolation data, the combination of the air temperature data and the dew-point temperature data, the combination of the air temperature data and the wind-chill temperature data, the combination of the air temperature data and the apparent temperature data, the combination of the air temperature data and the heat index data, and the scattered insolation data in the predetermined period is included as the input variable of the model. The predetermined period, for example, can be one day. The air temperature data in the predetermined period is a daily average air temperature, the air temperature difference data in the predetermined period is an air temperature difference within a day, and the humidity difference data in the predetermined period is a humidity difference within a day. The same applies to the other data in the predetermined period.

By inputting at least one of the air temperature data, the air temperature difference data, the humidity difference data or the apparent temperature difference data, the cloudage data, the direct insolation data, the combination of the air temperature data and the dew-point temperature data, the combination of the air temperature data and the wind-chill temperature data, the combination of the air temperature data and the apparent temperature data, the combination of the air temperature data and the heat index data, and the scattered insolation data in the predetermined period to the model, it is possible to obtain the insolation data after correction. By setting at least one of the data pieces described above as the input variable of the model, it is possible to consider the influence of the cloud.

In the insolation correction method of this embodiment, the input variable of the model includes insolation data corrected on the basis of the acquired weather data, and the insolation data is further corrected by acquiring the corrected insolation data.

In the insolation correction method, the insolation data corrected on the basis of the acquired weather data is included as the input variable of the model. The weather data may include at least one of dew-point depression data and air pressure data above sea level. The insolation data may be corrected on the basis of the weather data, or a time lag may be corrected by weighted-averaging the insolation data in time unit.

By inputting the corrected insolation data to the model, the model further corrects the corrected insolation data, and thus, a correction accuracy can be further improved.

In the insolation correction method of this embodiment, weather data including dew-point depression data is acquired, and in a case where acquired dew-point depression data is less than a predetermined dew-point depression threshold value, the acquired insolation data is corrected.

In the insolation correction method, the weather data including the dew-point depression data is acquired, and in a case where the acquired dew-point depression data is less than the predetermined dew-point depression threshold value, the acquired insolation data is corrected. In a case where the dew-point depression is greater than the dew-point depression threshold value, the dew-point depression is large, and thus, the humidity is low, and it is considered that it is not necessary to consider the influence of the cloud. On the other hand, in a case where the dew-point depression is less than the dew-point depression threshold value, the dew-point depression is small, and thus, the humidity is high, and it is considered that the rain or the fog occurs in the region, and it is considered that it is necessary to correct the acquired insolation data. The insolation data can be corrected by multiplying the insolation data and a predetermined coefficient c (here, c < 1, for example, c = 0.98, c = 0.95, c = 0.90, and the like). Since a prediction algorithm of the insolation data may be different in accordance with a supply source of the insolation data, the coefficient c may be suitably changed in accordance with the supply source of the insolation data.

In the insolation correction method of this embodiment, weather data including air pressure data above sea level is acquired, and in a case where the acquired air pressure data above sea level is a predetermined air pressure threshold value or less, the acquired insolation data is corrected.

In the insolation correction method, the weather data including the air pressure data above sea level is acquired, and in a case where the acquired air pressure data above sea level is the predetermined air pressure threshold value or less, the acquired insolation data is corrected. In a case where the air pressure above sea level is the air pressure threshold value (for example, 101 kPa or the like) or less, the land surface part is at a low air pressure, and the air flows to the land surface part from a part at a higher air pressure, and thus, convection occurs, and the cloud occurs, and therefore, it is considered that it is necessary to consider the influence of the cloud, and it is necessary to correct the acquired insolation data. The insolation data can be corrected by multiplying the insolation data and a predetermined coefficient b (here, b < 1, for example, b = 0.95, b = 0.90, b = 0.85, and the like). Since the prediction algorithm of the insolation data may be different in accordance with the supply source of the insolation data, the coefficient b may be suitably changed in accordance with the supply source of the insolation data.

In the insolation correction method of this embodiment, weather data including air pressure data above sea level is acquired, and in a case where a difference between a predetermined value and the acquired air pressure data above sea level is a predetermined difference threshold value or more, the acquired insolation data is corrected.

In the insolation correction method, the weather data including the air pressure data above sea level is acquired, and in a case where the difference between the predetermined value and the acquired air pressure data above sea level is the predetermined difference threshold value or more, the acquired insolation data is corrected. Specifically, it can be defined as Air Pressure Constant = {Predetermined Value a1 - [Air Pressure Above Sea Level]/Constant a2}, and the difference described above can be represented by the air pressure constant. The air pressure constant increases as the air pressure above sea level deceases. In a case where the air pressure constant is an air pressure constant threshold value (corresponding to the difference threshold value) or more, the land surface part is at a low air pressure, and the air flows to the land surface part from a part at a higher air pressure, and thus, convection occurs, and the cloud occurs, and therefore, it is considered that it is necessary to consider the influence of the cloud, and it is necessary to correct the acquired insolation data. The insolation data can be corrected by dividing the insolation data by the a-th power (of the air pressure constant). Here, Exponent a > 1. The exponent a, for example, can be a = 1.1, a = 1.2, a = 1.3, and the like. Since the prediction algorithm of the insolation data may be different in accordance with the supply source of the insolation data, the exponent a may be suitably changed in accordance with the supply source of the insolation data.

In the insolation correction method of this embodiment, the insolation data is acquired from a weather information service provider.

In the insolation correction method, the insolation data is acquired from the weather information service provider. Each of the weather information service providers provides the insolation data by using an individual prediction model. Accordingly, in a case of correcting the insolation data, a correction method can be changed for each of the weather information service providers.

In the insolation correction method of this embodiment, selection of a required weather information service provider among a plurality of weather information service providers is received, and the acquired insolation data is corrected by using the model corresponding to the selected weather information service provider.

In the insolation correction method, the selection of the required weather information service provider among the plurality of weather information service providers is received, and the acquired insolation data is corrected by using a model corresponding to the selected weather information service provider. In a case where the weather information service provider is a company A, a company B, and a company C, insolation data that is provided from the company A can be corrected by using a model for a company A. Similarly, insolation data that is provided from the company B can be corrected by using a model for a company B, and insolation data that is provided from the company C can be corrected by using a model for a company C. Accordingly, even in a case where a business operator of the supply source of the insolation data is different, the insolation data can be suitably corrected.

A model of this embodiment is generated by machine learning with insolation data and weather data as an input variable and insolation data after correction as an output variable.

The model is generated by the machine learning with the insolation data and the weather data as the input variable and the insolation data after correction as the output variable. In the model, a relationship between the input variable and the output variable is formulated, and in a case where the insolation data and the weather data are input, the insolation data after correction can be output.

A model generating method of this embodiment, includes: acquiring insolation data and weather data; acquiring insolation data after correction; and generating a model with the insolation data and the weather data as an input variable and the insolation data after correction as an output variable.

In the model generating method, the model with the acquired insolation data and the weather data as the input variable and the insolation data after correction as the output variable is generated. Specifically, the model can be configured by a neural network (including an input layer, an intermediate layer, and an output layer). The acquired insolation data and the acquired weather data are set as input data for learning, and the actually measured value of the insolation data is set as teacher data. In a case where the input data for learning is input to the model, the model can be generated by adjusting parameters (weight and bias) of the neural network such that a difference between the insolation data and the teacher data output by the model decreases.

A model providing method of this embodiment, includes: storing a plurality of different models generated by machine learning with insolation data and weather data as an input variable and insolation data after correction as an output variable; receiving selection of a required weather information service provider among a plurality of weather information service providers; and providing a model corresponding to the selected weather information service provider among the plurality of different models.

In the model providing method, the plurality of different models generated by the machine learning are stored. The selection of the required weather information service provider among the plurality of weather information service providers is received, and the model corresponding to the selected weather information service provider is provided. In a case where the weather information service provider is a company A and a company B, and a request for a model for a company A is received from the company A, the model for a company A can be provided to the company A. Similarly, in a case where a request for a model for a company B is received from the company B, the model for a company B can be provided to the company B. Accordingly, in a case where the weather information service provider performs a service for providing the insolation data by using an individual prediction model, it is possible to support the improvement of the accuracy of the insolation data to be provided.

### [Description of Reference Numerals]

- 1: Communication network
- 10: Terminal device
- 50: Server
- 51: Control unit
- 52: Insolation data acquisition unit
- 53: Weather data acquisition unit
- 54: Storage unit
- 55: First correction unit
- 56: Insolation-relevant information providing unit
- 57: Second correction unit
- 571: Input data generating unit
- 572: Model unit
- 58: Learning processing unit
- 581: Learning data generating unit
- 582: Model unit
- 583: Parameter determination unit
- 61: Weather data DB
- 62: Insolation data DB
- 100: Management server
- 110: Insolation DB

## Claims

1. An insolation correction method, comprising:
acquiring insolation data;
acquiring weather data; and
correcting the acquired insolation data, on the basis of the acquired weather data.

2. The insolation correction method according to claim 1,
wherein the acquired insolation data is corrected by using a model with the insolation data and the weather data as an input variable.

3. The insolation correction method according to claim 2,
wherein the input variable of the model includes dew-point depression data, and
weather data including the dew-point depression data is acquired.

4. The insolation correction method according to claim 2 or 3,
wherein the input variable of the model includes logarithmic data of humidity data, and
weather data including the logarithmic data of the humidity data is acquired.

5. The insolation correction method according to any one of claims 2 to 4,
wherein the input variable of the model includes at least one of air temperature data, air temperature difference data, humidity difference data or apparent temperature difference data, cloudage data, direct insolation data, a combination of air temperature data and dew-point temperature data, a combination of air temperature data and wind-chill temperature data, a combination of air temperature data and apparent temperature data, a combination of air temperature data and heat index data, and scattered insolation data in a predetermined period, and
weather data including at least one of the air temperature data, the air temperature difference data, the humidity difference data or the apparent temperature difference data, the cloudage data, the direct insolation data, the combination of the air temperature data and the dew-point temperature data, the combination of the air temperature data and the wind-chill temperature data, the combination of the air temperature data and the apparent temperature data, the combination of the air temperature data and the heat index data, and the scattered insolation data in the predetermined period is acquired.

6. The insolation correction method according to any one of claims 2 to 5,
wherein the input variable of the model includes insolation data corrected on the basis of the acquired weather data, and
the insolation data is further corrected by acquiring the corrected insolation data.

7. The insolation correction method according to claim 1,
wherein weather data including dew-point depression data is acquired, and
when the acquired dew-point depression data is less than a predetermined dew-point depression threshold value, the acquired insolation data is corrected.

8. The insolation correction method according to claim 1 or 7,
wherein weather data including air pressure data above sea level is acquired, and
when the acquired air pressure data above sea level is a predetermined air pressure threshold value or less, the acquired insolation data is corrected.

9. The insolation correction method according to any one of claims 1, 7, and 8,
wherein weather data including air pressure data above sea level is acquired, and
when a difference between a predetermined value and the acquired air pressure data above sea level is a predetermined difference threshold value or more, the acquired insolation data is corrected.

10. The insolation correction method according to any one of claims 1 to 9,
wherein the insolation data is acquired from a weather information service provider.

11. The insolation correction method according to any one of claims 2 to 6,
wherein selection of a required weather information service provider among a plurality of weather information service providers is received, and
the acquired insolation data is corrected by using the model corresponding to the selected weather information service provider.

12. An insolation correction device, comprising:
a first acquisition unit acquiring insolation data;
a second acquisition unit acquiring weather data; and
a correction unit correcting the insolation data acquired by the first acquisition unit, on the basis of the weather data acquired by the second acquisition unit.

13. A computer program allowing a computer to execute processing of:
acquiring insolation data;
acquiring weather data; and
correcting the acquired insolation data, on the basis of the acquired weather data.

14. A model generated by machine learning with insolation data and weather data as an input variable and insolation data after correction as an output variable.

15. A model generating method, comprising:
acquiring insolation data and weather data;
acquiring insolation data after correction; and
generating a model with the insolation data and the weather data as an input variable and the insolation data after correction as an output variable.

16. A model providing method, comprising:
storing a plurality of different models generated by machine learning with insolation data and weather data as an input variable and insolation data after correction as an output variable;
receiving selection of a required weather information service provider among a plurality of weather information service providers; and
providing a model corresponding to the selected weather information service provider, among the plurality of different models.
